# EUROPEAN PATENT APPLICATION

(11) **EP 4 401 199 A1**
(43) Date of publication of application: **17.07.2024**
(21) Application number: 22867145.9
(22) Date of filing: 12.08.2022
(51) Int. Cl.: H01M 10/637, H02M 7/48

(54) **HEATING CONTROL DEVICE**

(30) Priority: 07.09.2021 JP 2021145636
(71) Applicant: DENSO CORPORATION, Kariya-city, Aichi 448-8661 (JP)
(72) Inventor: KAZAOKA, Ryoya, Kariya-city, Aichi 448-8661 (JP)
(74) Representative: TBK
(86) International application number: PCT/JP2022/030780
(87) International publication number: WO 2023/037823

(57) **Abstract**

A temperature raising controller (70) has a function to raise the temperature of an electrical storage device (20) by controlling a switching operation of an inverter (30) with a power supply switch closed to create a flow of ripple current between the electrical storage device (20) and a capacitor (31). The temperature raising controller (70) determines whether an overvoltage condition which will result in overvoltage at the capacitor (31) is met during execution of a temperature-raising control task for the electrical storage device. When the overvoltage condition is determined to be met, the temperature raising controller performs a condition control mode which opens one of a first combination of upper arm switches of the inverter (30) and a second combination of lower arm switches of the inverter (30) and closes at least one of the upper arm switches or the lower arm switches in the other of the first and second combinations with the power supply switch closed to circulate electrical current between the inverter and a rotating electrical machine (40).

## Description

### CROSS REFERENCE TO RELATED DOCUMENT

The present application claims the benefit of priority of Japanese Patent Application No. 2021-145636 filed on September 7, 2021, the disclosure of which is incorporated in its entirety herein by reference.

### Technical Field

This disclosure relates generally to a temperature raising controller which works to control a rise in temperature of an electrical storage device.

### Background of Art

For instance, first, second, and third patent literatures, as listed below, teach vehicles in which a rotating electrical machine is installed as a traction power source. The rotating electrical machine is electrically connected to an electrical storage device through an inverter. Some of such types of vehicles are designed to perform a temperature-raising control task when the rotating electrical machine is at rest (i.e., the vehicle is stopped) to increase, in a controlled matter, the temperature of the electrical storage device placed in a low-temperature environment. The first patent literature discloses a system which controls an operation of the inverter when the rotating electrical machine is at rest to create a flow of d-axis current between the electrical storage device and the rotating electrical machine to elevate the temperature of the electrical storage device. In such a temperature-raising control mode, increasing or decreasing of the d-axis current will cause the electrical storage device to be charged or discharged cyclically to increase the temperature of the electrical storage device.

### PRIOR ART DOCUMENT

### PATENT LITERATURE

FIRST PATENT LITERATURE : Japanese Patent First Publication No. 2014-72955
SECOND PATENT LITERATURE : Japanese Patent First Publication No. 2011-55582
THIRD PATENT LITERATURE : Japanese Patent First Publication No. 2015-198463

### SUMMARY OF THE INVENTION

The increasing or decreasing of the d-axis current flowing between the electrical storage device and the rotating electrical machine in the temperature-raising control mode may result in a flow of the d-axis current in the form of a ripple current through a smoothing capacitor (which will also be merely referred to as a capacitor) installed in the inverter, so that voltage appearing at the capacitor will vary. When a large amount of ripple current undesirably flows through the capacitor, it may result in excessive increase in voltage at the capacitor, so that the capacitor is subjected to overvoltage.

The second and third patent literatures teach systems which, when an accident occurs in a vehicle during operation of the rotating electrical machine, which leads to a risk that the capacitor may be in the overvoltage state, work to open a power supply switch arranged between the electrical storage device and the capacitor to discharge electrical energy stored in the capacitor with the aid of a controlled operation of the inverter. Such a type of systems, however, face a risk that the volage at the capacitor may drop excessively after the capacitor is discharged. The use of the systems in the temperature-raising control mode for the electrical storage device may, therefore, encounter the drawback in that when the temperature-raising control mode is resumed after the capacitor is subjected to overvoltage, it may result in an increase in amount of electrical power required to perform the temperature-raising control mode and also result in an increased period of time until the temperature-raising control mode is enabled to resume, which leads to a failure in elevating the temperature of the electrical storage device.

This disclosure is made in view of the above problems. It is a principal object of this disclosure to provide a temperature raising controller which is capable of protecting a capacitor from damage and achieving required raising of the temperature of an electrical storage device.

In order to solve the above problems, there is provided the first means which realizes a temperature raising controller for use with an electrical power system. The electrical power system comprises: (a) an electrical storage device; (b) a rotating electrical machine which includes multi-phase windings; (c) an inverter which includes upper arm switches and lower arm switches, each of the upper arm switches and a respective one of the lower arm switches being connected in series with each other for a respective one of multiple phases, each of joints of the upper arm switches to the lower arm switches being connected to a first end of a corresponding one of the multi-phase windings; (d) a positive electrical path which connects high potential terminals of the upper arm switches to a positive terminal of the electrical storage device; (e) a negative electrical path which connects low potential terminals of the lower arm switches to a negative terminal of the electrical storage device; (f) a capacitor which is disposed between the positive electrical path and the negative electrical path in electrical connection therewith; and (g) a power supply switch which is disposed between the electrical storage device and the capacitor in at least one of the positive electrical path and the negative electrical path. The temperature raising controller works to control a switching operation of the inverter to create a flow of ripple current in a form of a *d*-axis current between the electrical storage device and the capacitor with the power supply switch closed, thereby raising temperature of the electrical storage device. The temperature raising controller comprises: (a) a determiner which determines whether an overvoltage condition which results in the capacitor being in an overvoltage state is met during execution of a temperature-raising control task for electrical storage device; and (b) a controller which, when the determiner determines that the overvoltage condition is met, works to perform a condition control mode which opens a first switch combination that is one of a first combination of the upper arm switches and a second combination of the lower arm switches and also closes at least one of the upper arm switches or the lower arm switches in a second switch combination that is other of the first and second combinations with the power supply switch closed to circulate electrical current between the inverter and the rotating electrical machine.

In the temperature-raising control mode for the electrical storage device, the temperature raising controller works to control a switching operation of the inverter to create the *d*-axis current between the electrical storage device and the capacitor in the form of ripple current with the power supply switch closed. The flow of the ripple current (i.e., the *d*-axis current) through the electrical storage device causes the electrical storage device to be discharged or charged cyclically with the rotating electrical machine kept stopped, thereby raising the temperature of the electrical storage device. The flow of the ripple current through the capacitor will result in variation in voltage appearing at the capacitor. When a large amount of ripple current undesirably flows through the capacitor, it will result in an excessive rise in voltage at the capacitor, thus leading to a risk that the capacitor may be in the overvoltage state.

In order to alleviate the above drawback, when the overvoltage condition which usually results in the overvoltage state of the capacitor is determined to be met, the temperature raising controller works to perform the condition control mode which opens the first switch combination that is one of the first combination of the upper arm switches and the second combination of the lower arm switches and also closes at least one of the upper arm switches or the lower arm switches in the second switch combination that is other of the first and second combinations with the power supply switch closed to circulate electrical current between the inverter and the rotating electrical machine. This blocks the electrical connection between the inverter and the capacitor, so that charges stored in the capacitor are discharged to the electrical storage device, thereby minimizing the risk of overvoltage at the capacitor. After the capacitor is discharged, the voltage at the capacitor is controlled to match the voltage at the electrical storage device, thereby avoiding an excessive drop in voltage at the capacitor, like when the power supply switch is opened. Additionally, the currents flowing through the phase windings of the rotating electrical machine circulate between the rotating electrical machine and inverter, thereby avoiding flow of the currents back to the capacitor. This enables the temperature of the electric storage device to be elevated properly without any damage to the capacitor.

The second means is to provide the temperature raising controller in which diodes are connected in reverse-parallel to the upper arm switches and the lower arm switches, respectively. In the condition control mode, the controller works to open all the upper arm switches or the lower arm switches in the first switch combination, close one or more of the upper arm switches or the lower arm switches in the second switch combination, and open a remaining one(s) of the upper arm switches or the lower arm switches in the second switch combination.

In the above structure, when the current flowing through each of the phase windings of the rotating electrical machine is required to be circulated between the rotating electrical machine and the inverter, the controller closes one of the upper arm switches or the lower arm switches through which the current flows and opens the remaining switches. This causes the current to flow through the diodes connected parallel to the opened switches, thereby resulting in an increase in loss of electric power as compared with when the current flows through the switches. This increases the rate at which the currents flowing through the phase windings of the rotating electrical machine converge, thereby achieving a required degree of rise in temperature of the electrical storage device.

The third means is to provide the temperature raising controller in which the condition control mode includes a first mode and a second mode which are switched alternately. In the first mode, the controller works to close at least one of the upper arm switches to circulate the electrical current between the inverter and the rotating electrical machine and open all the lower arm switches. In the second mode, the controller works to open all the upper arm switches and close at least one of the lower arm switches to circulate the electrical current between the inverter and the rotating electrical machine.

The circulation of the currents flowing through the phase windings of the rotating electrical machine between the rotating electrical machine and the inverter requires sequentially opening or closing the upper arm switches and the lower arm switches, thus needing a period of time (i.e., switching time) consumed by a sequence of turning on or off operations thereof. The switching time is usually a period of time in which no loss occurs in electrical power arising from the circulation. It is, therefore, preferable to decrease the switching time. The switching of the second mode to the first mode requires opening the lower arm switches after completion of closing of the upper arm switches, thus resulting in an increase in switching time. Alternatively, the switching of the first mode to the second mode enables the lower arm switches to start closed while the upper arm switches are being opened. This results in a decrease in switching time. More loss of the electrical power may, therefore, be achieved by alternately switching between the first mode and the second mode, thereby resulting in an increase in rate at which the currents flowing through the phase windings of the rotating electrical machine converge. This achieves a required elevation of temperature of the electrical storage device.

The fourth means is to provide the temperature raising controller in which when the determiner determines that the overvoltage condition is met, the controller works to alternately switch between a first time period and a second time period. The first time period is a period of time in which a temperature-raising control mode is performed to execute the temperature-raising control task with the condition control mode at rest. The second time period is a period of time in which only the condition control mode is performed.

When the capacitor is in the overvoltage state, and the temperature-raising control mode continues to be performed with the condition control mode at rest, it will cause the currents flowing toward the phase windings of the rotating electrical machine to flow back to the electrical storage device, thereby increasing the rate at which the currents flowing through the phase windings of the rotating electrical machine converge. The currents also flow back to the capacitor, thus leading to a risk that the capacitor may be kept in the overvoltage state. In order to alleviate such a risk, the controller is designed to alternately switch between the first time period in which the temperature-raising control mode is executed and the second time period in which the condition control mode is executed. This minimizes a risk that the capacitor may be kept in the overvoltage state and increases a rate at which the currents flowing through the phase windings of the rotating electrical machine converge, thereby achieving a required degree of rise in temperature of the electrical storage device and protecting the capacitor from damage.

The fifth means is to provide the temperature raising controller in which the power supply switch includes a main switch and a series-connected assembly including a sub-switch and a resistor which are connected in series with each other and also connected in parallel to the main switch. In the condition control mode, the controller works to close the sub-switch and open the main switch.

In the above structure, when the electrical energy stored in the capacitor is discharged to the electrical storage device, it will flow through the resistor, thereby resulting in a decrease in rate at which the electrical energy is discharged from the capacitor to minimize the deterioration in operation of the electrical storage device which usually arises from flow of a large amount of current thereto. The discharge of electrical energy through the resistor results in a large amount of charge being discharged from the capacitor, thereby leading to more loss of electrical power. This results in a decrease in period of time required for discharge of the capacitor, which achieves a required degree of safeguarding of the capacitor.

The sixth means is to provide the temperature raising controller in which the overvoltage condition includes a first condition where a voltage appearing at the capacitor is higher than a first predetermined value, a second condition where an electrical current flowing through the rotating electrical machine is higher than a second predetermined value, and a third condition where an electrical current flowing through the electrical storage device is higher than a third predetermined value. When at least one of the first condition, the second condition, and the third condition is met, the determiner determines that the overvoltage condition is satisfied.

The above structure enables at least one of voltage at the capacitor, current flowing through the rotating electrical machine, and current flowing through the electrical storage device to be used to determine whether the capacitor is in the overvoltage state.

The seventh means is to provide the temperature raising controller in which when a temperature raising time period for the electrical storage device is longer than a predetermined time period threshold, the determiner determines that the overvoltage condition is satisfied.

In the above structure, the use of the temperature raising time period for the electrical storage device enables a determination of whether the capacitor has a risk of overvoltage, thereby preventing the capacitor from being actually subjected to overvoltage.

The eighth means is to provide the temperature raising controller which further includes a setting unit which sets the predetermined time period threshold as a function of a temperature of the electrical storage device at start of the temperature-raising control task. The setting unit determines the time period threshold to be short with a decrease in the temperature of the electrical storage device.

Generally, the lower the temperature of the electrical storage device at the start of the temperature-raising control task, the longer the temperature raising time period for the electrical storage device, which results in an increased risk of overvoltage of the capacitor. The above structure determines the time period threshold to be decreased with a decrease in temperature of the electrical storage device, thereby minimizing a risk of overvoltage at the capacitor.

The ninth means is to provide the temperature raising controller in which when, after the overvoltage condition is determined to be met, at least one of a first condition and a second condition is satisfied, the controller terminates the condition control mode. The first condition is a condition where a voltage developed at the capacitor converges in a predetermined voltage range, and an electrical current flowing through the rotating electrical machine converges in a predetermined current range. The second condition is a condition where a period of time in which the condition control mode continues to be executed becomes longer than a predetermined period of time.

The above structure enables is capable of determining whether the condition control mode should be terminated using a combination of the capacitor voltage and an electrical current flowing through the electrical machine and/or the length of time the condition control mode has been performed.

### BRIEF DESCRIPTION OF THE DRAWINGS

The above-described object, other objects, features, or beneficial advantages in this disclosure will be apparent from the following detailed discussion with reference to the drawings.

In the drawings:
Fig. 1 is a view which illustrates an overall structure of an electrical power system;
Fig. 2 is a flowchart which shows a sequence of steps of a temperature-raising control task in the first embodiment;
Fig. 3(A) is a view which demonstrates flows of electrical current in a temperature-raising control mode;
Fig. 3(B) is a view which demonstrates flows of electrical current in a condition control mode;
Figs. 4(A), 4(B), and 4(C) demonstrate time-sequence changes in voltage at a capacitor, currents flowing through phase windings, and current flowing through a battery;
Fig. 5(A) is a view which demonstrates flows of electrical current in a first mode of a temperature-raising control task in a second modification of the first embodiment;
Fig. 5(B) is a view which demonstrates flows of electrical current in a second mode of a temperature-raising control task in the second modification of the first embodiment;
Fig. 6 is a view which shows an operation of a temperature-raising control task in the third modification of the first embodiment;
Fig. 7 is a flowchart which shows a sequence of steps of a temperature-raising control task in the second embodiment; and
Fig. 8 is a graph which demonstrates a correlation between a battery temperature and a time period threshold at start of a temperature-raising control task.

### MODE FOR CARRING OUT THE INVENTION

### FIRST EMBODIMENT

An embodiment in which a temperature raising controller according to this disclosure is used with the electrical power system 10 mounted in a vehicle will be described below with reference to the drawings.

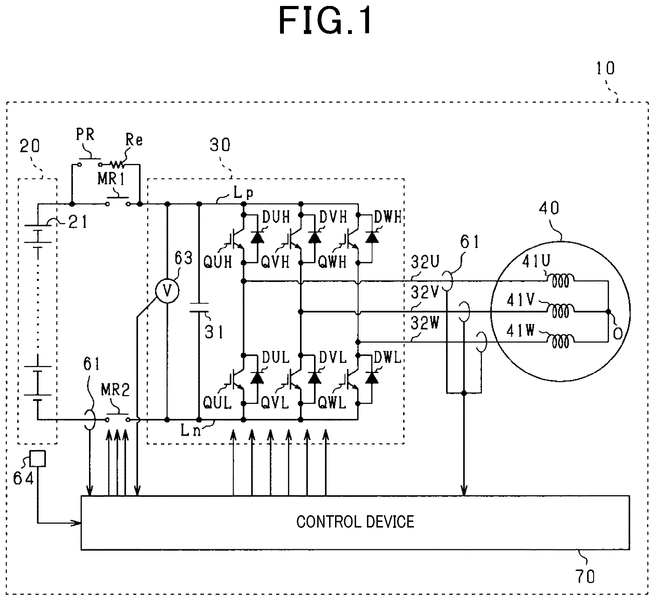

The electrical power system 10, as can be seen in Fig. 1, works to deliver or receive electrical power to or from the assembled battery 20 and the rotating electrical machine 40 through the inverter 30. The inverter 30 functions as an electrical power converter. The assembled battery 20 functions as an electrical storage device.

The rotating electrical machine 40 works as a three-phase synchronous machine and includes the U-phase winding 41U, the V-phase winding 41V, and the W-phase winding 41W which are in a star-connection to form a stator winding. The U-, V-, and W-phase windings 41U, 41V, and 41W are arranged at an electrical angle of 120° away from each other. The rotating electrical machine 40 is designed as, for example, a permanent magnet synchronous machine. In this embodiment, the rotating electrical machine 40 is designed as a motor-vehicle-mounted main engine working as a vehicle traction power source. The rotating electrical machine 40 may be designed as an induction machine.

The inverter 30 is equipped with three-phase series-connected assemblies including the upper arm switches QUH, QVH, and QWH and the lower arm switches QUL, QVL, and QWL. Each of the upper arm switches QUH, QVH, and QWH and the lower arm switches QUL, QVL, and QWL is made of voltage-controlled semiconductor switches, such as IGBTs. The upper arm switches QUH, QVH, and QWH and the lower arm switches QUL, QVL, and QWL are equipped with diodes DUH, DVH, DWH, DUL, DVL, and DWL, such as freewheel diodes. Each of the diodes DUH, DVH, DWH, DUL, DVL, and DWL is inverse-parallel connected to a corresponding one of the upper arm switches QUH, QVH, and QWH and the lower arm switches QUL, QVL, and QWL.

The U-phase winding 41U of the rotating electrical machine 40 has a first end connected through the U-phase conductor 32U, such as a busbar, to a joint between a low potential terminal of the U-phase upper arm switch QUH and a high potential terminal of the U-phase lower arm switch QUL. The V-phase winding 41V of the rotating electrical machine 40 has a first end connected through the V-phase conductor 32V, such as a busbar, to a joint between a low potential terminal of the V-phase upper arm switch QVH and a high potential terminal of the V-phase lower arm switch QVL. The W-phase winding 41W of the rotating electrical machine 40 has a first end connected through the W-phase conductor 32W, such as a busbar, to a joint between a low potential terminal of the W-phase upper arm switch QWH and a high potential terminal of the V-phase lower arm switch QWL. The U-phase, V-phase, and W-phase windings 41U, 41V, and 41W have second ends connected together at a neutral point O. The U-phase, V-phase, and W-phase windings 41U, 41V, and 41W have the same number of turns, so that they have the same values of inductance.

The high potential terminals of the upper arm switches QUH, QVH, and QWH are connected to a positive terminal of the assembled battery 20 using the positive electrical path Lp, such as a busbar. The low potential terminals of the lower arm switches QUL, QVL, and QWL are connected to a negative terminal of the assembled battery 20 using the negative electrical path *Ln,* such as a busbar.

The inverter 30 has installed therein a capacitor 31, such as a smoothing capacitor, which is located between the positive electrical path *Lp* and the negative electrical path *Ln.* The capacitor 31 may alternatively be arranged outside the inverter 30.

The assembled battery 20 is made up of the electric cells 21 connected in series with each other to develop a terminal voltage of, for example, several hundreds of voltage. In this embodiment, the electric cells 21 of the assembled battery 20 have terminal voltages (e.g., voltage ratings) which are identical in level with each other. Each of the electric cells 21 may be made of a lithium-ion cell or a nickel-hydrogen storage cell.

The electrical power system 10 also includes the first main relay MR1 and the second main relay MR2 which serve as main switches. The first main relay MR1 is disposed between the assembled battery 20 and the capacitor 31 in the positive electrical path *Lp.* The second main relay MR2 is disposed between the assembled battery 20 and the capacitor 31 in the negative electrical path *Ln.* Each of the first and second main relays MR1 and MR2 works to selectively establish or block electrical connection between the assembled battery 20 and the rotating electrical machine 40.

The first main relay MR1 is connected parallel to a series-connected assembly including the pre-charge relay PR and the resistor Re which are connected in series with each other. The pre-charge relay PR serves as a sub-switch. At the start of transmission of electricity between the assembled battery 20 and the rotating electrical machine 40, the pre-charge relay PR is closed instead of the first main relay MR1 to minimize a risk that an inrush current may flow between the assembled battery 20 and the rotating electrical machine 40. In this embodiment, each relay is implemented by a mechanical relay switch. Each of the first and second main relays MR1 and MR2, the pre-charge relay PR, and the resistor Re functions as a power supply switch.

The electrical power system 10 includes the phase-current sensors 61, the battery current sensor 62, the voltage sensor 63, and the temperature sensor 64. The phase-current sensor 61 are installed one on each of the phase-conductors 32U, 32V, and 32W to measure the phase currents IU, IV, and IW flowing through the phase windings 41U, 41V, and 41W.

The battery current sensor 62 is located closer to the assembled battery 20 than the second main relay MR2 is in the negative electrical path Ln and works to measure the battery current IB that is electrical current flowing through the assembled battery 20. The voltage sensor 63 works to measure the capacitor voltage VC that is voltage applied to the capacitor 31. The temperature sensor 64 works to measure the battery temperature TB that is temperature of the assembled battery 20. The parameters measured by the sensors 61 to 64 are inputted to the control device 70 installed in the electrical power system 10.

The control device 70 serves as a temperature raising controller and is made mainly of a microcomputer working to execute programs stored in a memory installed therein to perform a variety of control tasks. The control device 70 controls on-off operations of the switches of the inverter 30 to produce a command value for the rotating electrical machine 40 using a parameter, as controlled in the rotating electrical machine 40, in a feed-back mode. In this operation, the electrical power system 10 serves to convert *dc*-power, as produce by the assembled battery 20, into *ac-*power and output it to the rotating electrical machine 40.

The control device 70 works to control the on-off operations of the first and second main relays MR1 and MR2 and the pre-charge relay PR.

The control device 70 is designed to perform a temperature raising function to increase the temperature of the assembled battery 20. Such a temperature-raising control mode is entered when the vehicle is stopped, that is, the rotating electrical machine 40 is in a deactivated state. In the temperature-raising control mode, the control device 70 works to control a switching operation of the inverter 30 to create a *d*-axis current between the assembled battery 20 and the rotating electrical machine 40 with the first and second main relays MR1 and MR2 closed. Specifically, the control device 70 selectively increases or decreases the *d*-axis current using inductances of the assembled battery 20, the electric paths Lp and Ln, the inverter 30, and the phase conductors 32U, 32V, and 32W and resonance of the capacitor 31. The increase or decrease in d-axis current will cause the assembled battery 20 to be charged or discharged cyclically, thereby raising the temperature of the assembled battery 20. When the d-axis current is flowing through the rotating electrical machine 40, the torque outputted by the rotating electrical machine 40 is kept zero.

The increase or decrease in *d*-axis current flowing between the assembled battery 20 and the rotating electrical machine 40 will cause the *d*-axis current to flow through the capacitor 31 in the form of a ripple current IR, thereby resulting in a variation in capacitor voltage VC. The flow of an unexpected great degree of the ripple current IR will result in excessive rise in voltage at the capacitor 31, so that an overvoltage may appear on the capacitor 31.

In order to alleviate the above problem, when an overvoltage condition which will cause the capacitor 31 to be subjected to overvoltage is determined to be met, the control device 70 enters a condition control mode to open one of a combination of the upper arm switches QUH, QVH, and QWH and a combination of the upper arm switches QUH, QVH, and QWH and close the other with the first and second main relays MR1 and MR2 closed. Specifically, in the condition control mode, the U-, V-, and W-phase upper arm switches QUH, QVH, and QWH are all opened, while the U-, V-, and W-phase lower arm switches QUL, QVL, and QWL are all closed to create a zero-vector output mode, thereby blocking an electrical connection between the inverter 30 and the capacitor 31, which enables a suitable rise in temperature of the assembled battery 20 while electrically protecting the capacitor 31.

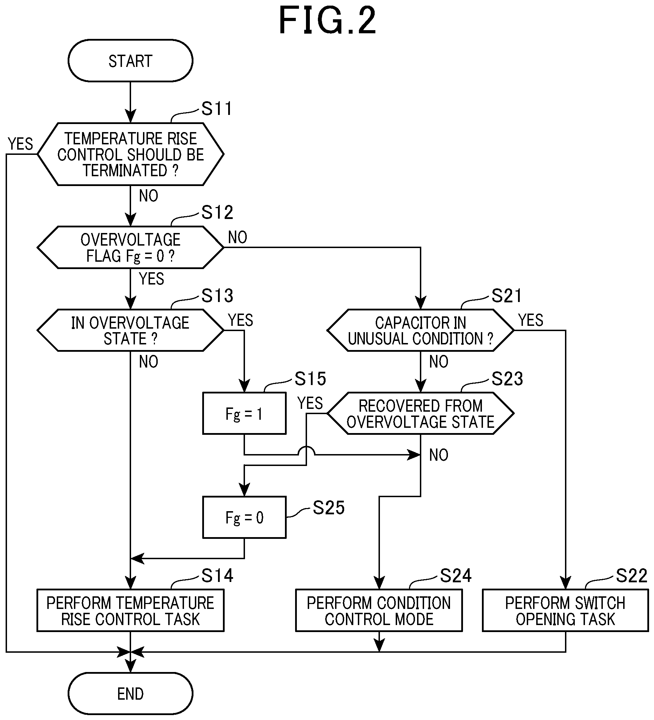

Fig. 2 shows a flowchart of a temperature-raising control task in this embodiment. When the battery temperature TB is lower than a preselected temperature threshold *TBth* at the start of the vehicle, the control device 70 performs the temperature-raising control task cyclically at a given interval until the rotating electrical machine 40 starts to be activated.

After the temperature-raising control task starts, the routine proceeds to step S11 wherein it is determined whether the temperature-raising control task for the assembled battery 20 should be terminated. Specifically, it is determined whether predetermined temperature raising control terminating conditions are met. The temperature raising control terminating conditions, as referred to in this embodiment, include a first condition where the battery temperature TB is higher than the temperature threshold *TBth* and a second condition where the control device 70 has received a temperature raising control abort instruction from a primary control device disposed outside the electrical power system 10. If at least one of the temperature raising control terminating conditions is met, the routine terminates. Alternatively, when none of the temperature raising control terminating conditions are met, then the routine proceeds to step S12.

In step S12, it is determined whether an overvoltage flag *Fg* is zero. The overvoltage flag *Fg* is set to be zero at the start of the vehicle. When the capacitor 31 is not in an overvoltage state, the overvoltage flag *Fg* is set to zero. Alternatively, when the capacitor 31 is in the overvoltage state during execution of the temperature-raising control task, the overvoltage flag *Fg* is set to one. If the overvoltage flag *Fg* is determined to be zero in step S12, then the routine proceeds to step S13. Alternatively, the overvoltage flag *Fg* is determined to be one, then the routine proceeds to step S21.

In step S13, it is determined whether the capacitor 31 is in the overvoltage state. Specifically, it is determined whether overvoltage conditions which will cause the capacitor 31 to be subjected to overvoltage are met. The overvoltage conditions, as referred to herein, includes a first overvoltage condition where the capacitor voltage VC is higher than a preselected voltage threshold *VCth,* a second overvoltage condition where at least one of the phase currents IU, IV, and IW is higher than a preselected phase current threshold *ISth,* and a third overvoltage condition where the battery current IB is higher than a preselected battery current threshold *IBth.*

If it is determined in step S13 that none of the overvoltage conditions are met, meaning that the capacitor 31 is not in the overvoltage state, then the routine proceeds to step S14 wherein the temperature-raising control task continues to be performed. The routine then terminates.

Alternatively, if at least one of the overvoltage conditions is determined to be met in step S13, meaning that the capacitor 31 is in the overvoltage state, then the routine proceeds to step S15. A factor causing the capacitor 31 to be subjected to overvoltage includes a factor resulting in a temporal failure in transmitting a switching control instruction from the control device 70 to the inverter 30 due to noise. In step S15, the overvoltage flag *Fg* is set to one. The routine then proceeds to step S24 wherein the condition control mode is performed. The routine then terminates. The operation in step S13 realizes a determiner. The operation in step S24 realizes a controller.

In step S21, it is determined whether the capacitor 31 is in an unusual state, meaning that the capacitor 31 is in the overvoltage state, after which the capacitor voltage VC is rising above the voltage threshold *VCth* even in the condition control mode. Specifically, in step S21, it is determined whether preselected unusual conditions are met. The unusual conditions include a first unusual condition where the capacitor voltage VC is higher than an unusual voltage threshold *VCXth* set higher than the voltage threshold *VCth,* a second unusual condition where at least one of the phase currents IU, IV, and IW is higher than an unusual phase current threshold *ISXth* set higher than the phase current threshold Isth, and a third unusual condition where the battery current IB is higher than an unusual battery current threshold *IBXth* set higher than the battery current threshold *IBth.*

If at least one of the unusual conditions is determined to be met in step S21, meaning that the capacitor 31 is in the unusual state, then the routine proceeds to step S22. A factor causing the malfunction of the capacitor 31 includes an intemporal malfunction of at least one of the switches of the inverter 30. In step S22, a switch opening task is performed to open the first and second main relays MR1 and MR2 and the pre-charge relay PR. The routine then terminates.

Alternatively, if none of the unusual conditions are determined to be met in step S21, meaning that the capacitor 31 is operating properly, then the routine proceeds to step S23 wherein it is determined whether the capacitor 31 has been recovered from the overvoltage state, so that it is capable of operating properly. Specifically, it is determined whether preselected recovery conditions are met. The recovery conditions, as referred to herein, includes a first recovery condition where the capacitor voltage VC remains in a predetermined voltage range, as defined based on a battery voltage (e.g., the level of the capacitor voltage VC at the start of the vehicle), for more than a given period of time, and all the phase currents IU, IV, and IW remain in a predetermined current range, as defined based on zero current, for more than a given period of time, and a second recovery condition where the condition control mode continues to be executed for more than a predetermined period of time.

If none of the recovery conditions are determined to be met in step S23, meaning that the capacitor 31 is still in the overvoltage state, then the routine proceeds to step S24. Alternatively, if at least one of the recovery conditions is determined to be met in step S23, meaning that the capacitor 31 is not in the overvoltage state, then the routine proceeds to step S25 wherein the overvoltage flag Fg is set to zero. The routine then proceeds to step S14.

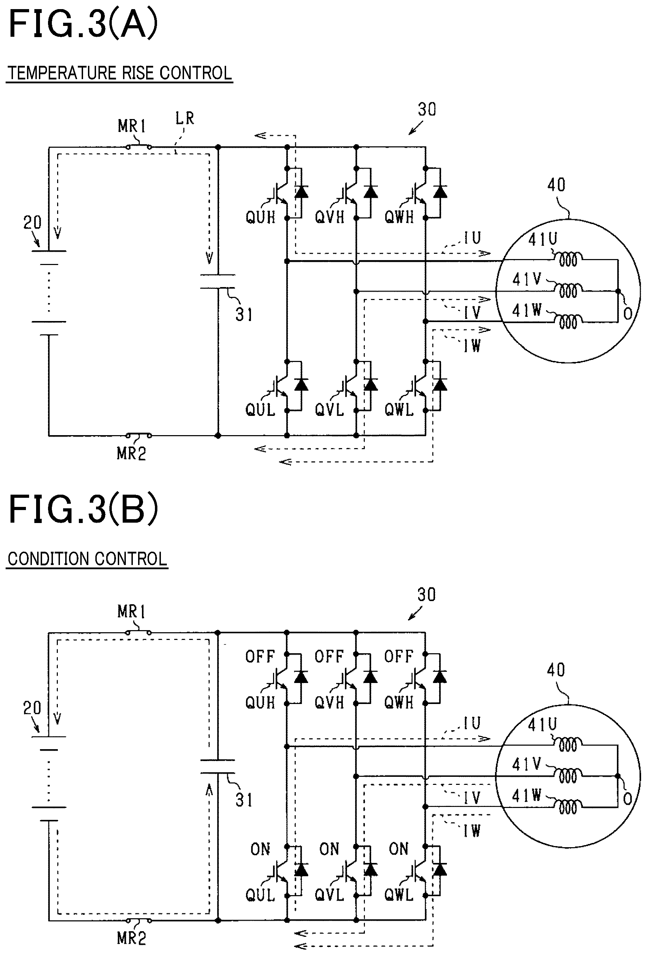

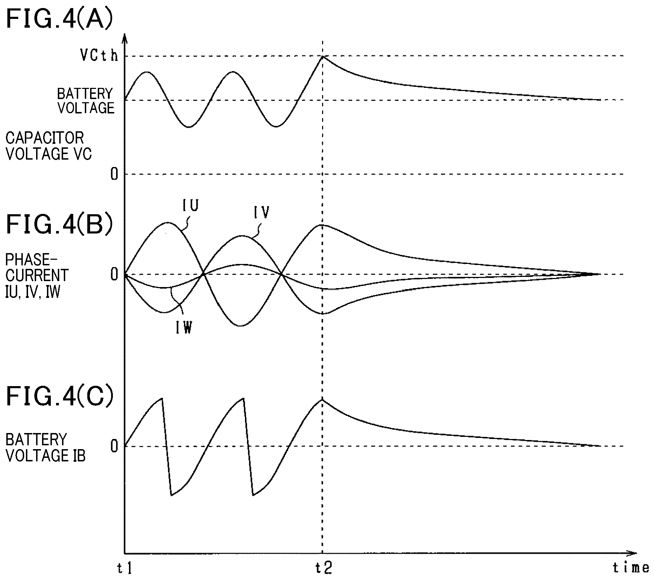

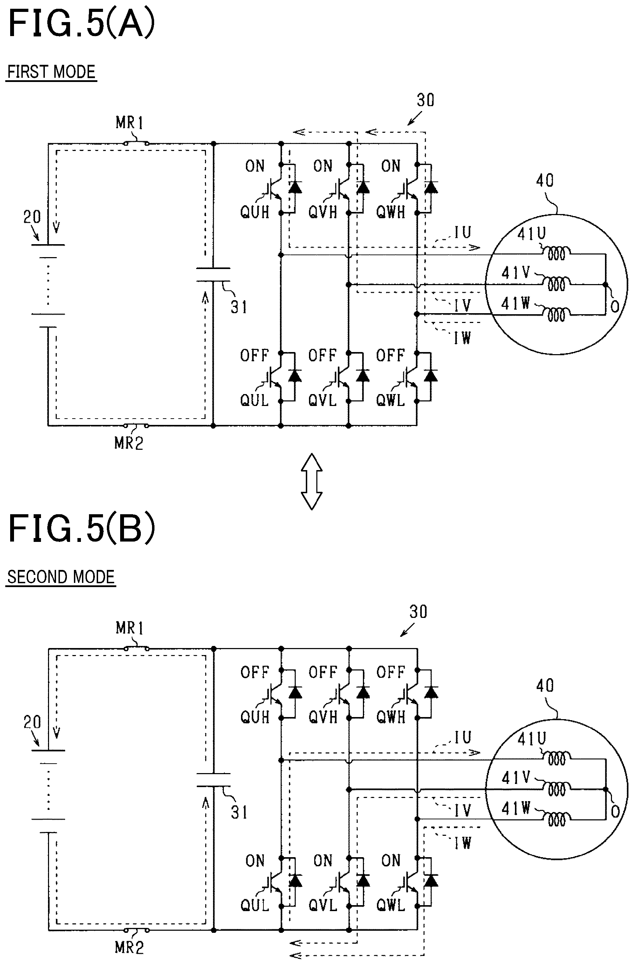

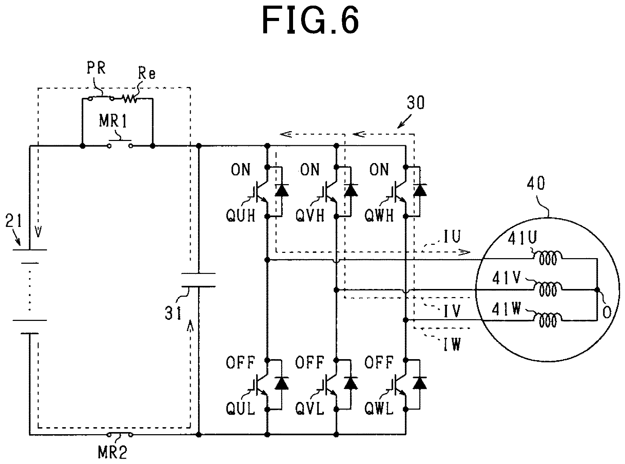

Figs. 3(A), 3(B), 4(A), 4(B), and 4(C) demonstrate variations in capacitor voltage VC in the temperature-raising control mode and the condition control mode. Figs. 3(A) and 3(B) omit the sensors 61 to 64 and the control device 70 for the brevity of illustration. The same is true of Figs. 5(A) to 6.

In the temperature-raising control mode illustrated in Fig. 3(A), the resonance of the capacitor 31 causes the *d-*axis current flowing between the assembled battery 20 and the rotating electrical machine 40 to cyclically increase and decrease, so that the phase currents IU, IV, and IW vary. The phase currents IU, IV, and IW are, as can be seen in Fig. 4(B), controlled in the form of the *d*-axis current, so that they do not have waveforms which are spaced 120° in electrical angle away from each other, like in the operation of the rotating electrical machine 40.

The battery current IB is, as demonstrated in Fig. 4(C), changed synchronously with variations in the phase currents IU, IV, and IW. The battery current IB changes cyclically on a positive side and a negative side thereof, thereby causing the assembled battery 20 to be charged or discharged cyclically, which elevates the temperature of the assembled battery 20.

The increase or decrease in *d*-axis current flowing between the assembled battery 20 and the rotating electrical machine 40, as demonstrated in Fig. 4(A), causes the *d*-axis current to flow through the capacitor 31 in the form of ripple current IR, thereby resulting in variation in capacitor voltage VC. In the example illustrated in Fig. 4(A), the capacitor voltage VC is controlled to be lower than the voltage threshold *VCth* between time *t1* and time *t2.* The capacitor voltage VC becomes higher than the voltage threshold *VCth* at time t2, so that the capacitor 31 will be in the overvoltage state.

When the capacitor 31 has been subjected to overvoltage, the condition control mode is entered. The condition control mode is, as illustrated in Fig. 3(B), to open (i.e., turn off) all the upper arm switches QUH, QVH, and QWH and also close (i.e., turn on) all the lower arm switches QUL, QVL, and QWL. This blocks the electrical connection between the inverter 30 and the capacitor 31, so that electrical energy stored in the capacitor 31 is discharged to the assembled battery 20. This causes, as illustrated in Fig. 4(A), the capacitor voltage VC to drop at a given time constant to prevent the capacitor 31 from being kept in the overvoltage state.

The capacitor voltage VC after the capacitor is discharged is controlled to be the battery voltage. This prevents the capacitor voltage VC from dropping excessively, like when the first and second main relays MR1 and MR2 are opened. The excessive drop in capacitor voltage VC after the capacitor 31 is discharged usually requires charging the capacitor 31 until the capacitor voltage VC becomes the battery voltage when the capacitor 31 is recovered from the overvoltage state, and the temperature-raising control mode is resumed, thereby resulting in an increase in amount of electrical power required for the temperature-raising control mode and also in an increase in time consumed until the temperature-raising control mode is resumed. This embodiment minimizes the excessive drop in the capacitor voltage VC, thereby enabling the temperature of the assembled battery 20 to be increased adequately.

The phase currents IU, IV, and IW flowing through the phase windings 41U, 41V, and 41W of the rotating electrical machine 40 circulate between the rotating electrical machine 40 and the lower arm switches QUL, QVL, and QWL of the inverter 30, thereby preventing them from flowing back to the capacitor 31 through the diodes connected in reverse-parallel to the switches of the inverter 30.

Each of the first and second main relays MR1 and MR2 in this embodiment is made of a mechanical relay, so that a period of time required to open or close the first and second main relays MR1 and MR2 will be longer than that required to open or close the upper arm switches QUH, QVH, and QWH and the lower arm switches QUL, QVL, and QWL which are made of semiconductor switches. This may lead to a risk that when the capacitor voltage VC is in the overvoltage state, a lag may occur in protecting the capacitor 31 when the first and second main relays MR1 and MR2 are opened. In order to alleviate this problem when the capacitor voltage VC is in the overvoltage state, this embodiment works to open the upper arm switches QUH, QVH, and QWH and close the lower arm switches QUL, QVL, and QWL to protect the capacitor 31.

The above-described embodiment offers the following beneficial advantages.

When the overvoltage conditions which will result in the capacitor 31 being in the overvoltage state are determined to be met, the condition control mode is, as described above, entered to open the upper arm switches QUH, QVH, and QWH with the first and second main relays MR1 and MR2 closed and also close the lower arm switches QUL, QVL, and QWL. This blocks the electrical connection between the inverter 30 and the capacitor 31, so that charges stored in the capacitor 31 are discharged to the assembled battery 20, thereby minimizing the risk of overvoltage at the capacitor 31. After the capacitor 31 is discharged, the capacitor voltage VC is controlled to the battery voltage, thereby avoiding an excessive drop in capacitor voltage VC, like when the first and second main relays MR1 and MR2 are opened. Additionally, the phase currents IU, IV, and IW flowing through the phase windings 41U, 41V, and 41W of the rotating electrical machine 40 circulate between the rotating electrical machine 40 and the lower arm switches QUL, QVL, and QWL of the inverter 30, thereby avoiding flow of the phase currents IU, IV, and IW back to the capacitor 31. This enables the temperature of the assembled battery 20 to be increased properly without any damage to the capacitor 31.

This embodiment is, as apparent from the above discussion, capable of using the capacitor voltage VC, the phase currents IU, IV, and IW, and/or the battery current IB to determine whether the capacitor 31 is in the overvoltage state. This embodiment is also capable of determining whether the condition control mode should be terminated using at least one of a combination of the capacitor voltage VC and the phase currents IU, IV, and IW and the length of time the condition control mode has been performed.

### FIRST MODIFICATION OF FIRST EMBODIMENT

When the phase currents IU, IV, and IW flowing to the phase windings 41U, 41V, and 41W of the rotating electrical machine 40 circulate, as illustrated in Fig. 3(B), between the rotating electrical machine 40 and the inverter 30, one or two of them will flow from the low potential terminal(s) to the high potential terminal(s) of one or two of the lower arm switches QUL, QVL, and QWL (i.e., the U-phase lower arm switch QUL in the example demonstrated in Fig. 3(B)). In such a case, the one or two of the lower arm switches QUL, QVL, and QWL may be opened with the remaining one or two of the lower arm switches QUL, QVL, and QWL closed, thereby blocking the flow of the current(s) from the low potential terminal(s) to the high potential terminal(s).

The opening of the one or two of the lower arm switches QUL, QVL, and QWL will cause the current to flow through the diode(s) connected in reverse-parallel thereto, thereby resulting in an increase in loss of electrical power as compared with when the current flows through the lower arm switches QUL, QVL, and QWL. This will result in an increased rate at which the phase currents IU, IV, and IW flowing through the phase windings 41U, 41V, and 41W of the rotating electrical machine 40 converge, thereby achieving a required elevation of temperature of the assembled battery 20.

### SECOND MODIFICATION OF FIRST EMBODIMENT

Instead of opening the upper arm switches QUH, QVH, and QWH with the lower arm switches QUL, QVL, and QWL closed in the condition control mode, the upper arm switches QUH, QVH, and QWH may be all closed, while the lower arm switches QUL, QVL, and QWL may be opened. The first modification may be designed to alternately switch between a first mode and a second mode. The first mode is, as illustrated in Fig. 5(A), to close all the upper arm switches QUH, QVH, and QWH and open all the lower arm switches QUL, QVL, and QWL. The second mode is, as illustrated in Fig. 5(B), to open all the upper arm switches QUH, QVH, and QWH and close all the lower arm switches QUL, QVL, and QWL.

The circulation of the phase currents IU, IV, and IW flowing through the phase windings 41U, 41V, and 41W of the rotating electrical machine 40 between the rotating electrical machine 40 and the inverter 30 requires sequentially opening or closing the upper arm switches QUH, QVH, and QWH and the lower arm switches QUL, QVL, and QWL, thus needing a period of time (i.e., switching time) consumed by a sequence of turning on or off operations thereof. The switching time is usually a period of time in which no loss occurs in electrical power arising from the circulation. It is, therefore, preferable to decrease the switching time.

The switching of the second mode to the first mode requires opening the lower arm switches QUL, QVL, and QWL after completion of closing of the upper arm switches QUH, QVH, and QWH, thus resulting in an increase in switching time. Alternatively, the switching of the first mode to the second mode enables the lower arm switches QUL, QVL, and QWL to start closed while the upper arm switches QUH, QVH, and QWH are being opened without the upper arm switches QUH, QVH, and QWH and the lower arm switches QUL, QVL, and QWL being all simultaneously closed. This results in a decrease in switching time. More loss of the electrical power may, therefore, be achieved by alternately switching between the first mode and the second mode, thereby resulting in an increase in rate at which the phase currents IU, IV, and IW flowing through the phase windings 41U, 41V, and 41W of the rotating electrical machine 40 converge. This achieves a required elevation of temperature of the assembled battery 20.

### THIRD MODIFICATION OF FIRST EMBODIMENT

When the condition control mode is entered, the control device 70 may work to close the pre-charge relay PR instead of the first main relay MR1. This causes electrical energy stored in the capacitor 31 to be discharged to the assembled battery 20 through the resistor Re, thereby resulting in a decrease in rate at which the electrical energy is discharged from the capacitor 31 to minimize the deterioration in operation of the assembled battery 20 which usually arises from flow of a large amount of current thereto. The discharge of electrical energy through the resistor Re results in a large amount of charge discharged from the capacitor 31, thereby leading to more loss of electrical power. This results in a decrease in period of time required for discharge of the capacitor 31, which achieves a required degree of safeguard of the capacitor 31.

### FOURTH MODIFICATION OF FIRST EMBODIMENT

When the capacitor 31 has been subjected to overvoltage, the control device 70 may work to alternately perform the temperature-raising control mode and the condition control mode. In other words, a period of time of operation of the control device 70 is divided into two different periods: a first one in which the temperature-raising control mode is performed with the condition control mode at rest, and a second one in which only the condition control mode is performed. The first and second time periods are set to alternate cyclically.

When the capacitor 31 is in the overvoltage state, and the temperature-raising control mode continues to be performed with the condition control mode at rest, it will cause the phase currents IU, IV, and IW flowing toward the phase windings 41U, 41V, and 41W of the rotating electrical machine 40 to flow back to the assembled battery 20, thereby increasing the rate at which the phase currents IU, IV, and IW flowing through the phase windings 41U, 41V, and 41W of the rotating electrical machine 40 converge. The currents also flow back to the capacitor 31, thus leading to a risk that the capacitor 31 may be kept in the overvoltage state.

When the capacitor 31 becomes in the overvoltage state, the execution of the condition control mode with the temperature-raising control mode at rest will result in a drop in capacitor voltage VC, thereby minimizing the risk that the capacitor 31 is kept in the overvoltage state. It, however, faces a drawback in that it may become difficult to rapidly converge the phase currents IU, IV, and IW depending upon degrees of the phase currents IU, IV, and IW flowing through the phase windings 41U, 41V, and 41W of the rotating electrical machine 40, which may lead to a lag in resuming the temperature-raising control mode.

The control device 70 in this embodiment is designed to alternately switch between a first time in which the temperature-raising control mode is executed and a second time in which the condition control mode is executed. This minimizes a risk that the capacitor 31 may be kept in the overvoltage state and increases a rate at which the phase currents IU, IV, and IW flowing through the phase windings 41U, 41V, and 41W of the rotating electrical machine 40 converge, thereby achieving a required degree of rise in temperature of the assembled battery 20 and protecting the capacitor 31 from damage. A ratio between the first time in which the temperature-raising control mode is executed and the second time in which the condition control mode is executed may be determined as a function of degrees of the phase currents IU, IV, and IW at a time when the capacitor 31 is in the overvoltage state.

### SECOND EMBODIMENT

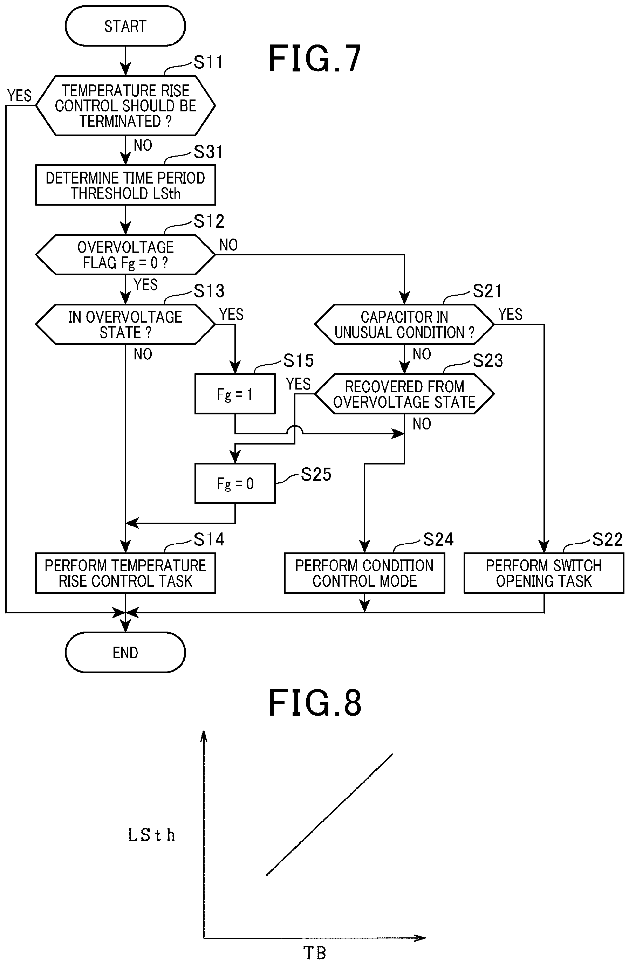

The second embodiment will be described below in terms of differences between itself and the first embodiment with reference to Figs. 7 and 8.

This embodiment is different in the overvoltage conditions used in the temperature-raising control task from the first embodiment. Specifically, the overvoltage conditions include a condition where a temperature raising time period LS (i.e., a heating duration) for the assembled battery 20 is longer than a predetermined time period threshold *LSth.* The temperature-raising control task in this embodiment includes a task in which the time period threshold *LSth* is determined.

Fig. 7 shows a flowchart of a temperature-raising control task in this embodiment. The same step numbers as those in Fig. 2 will refer to the same operations, and explanation thereof in detail will be omitted here.

In the temperature-raising control task in this embodiment, if a NO answer is obtained in step S11, meaning that the temperature-raising control task for the assembled battery 20 should not be terminated, then the routine proceeds to step S31 wherein the time period threshold *LSth* is determined. The routine then proceeds to step S12. Usually, when the electrical power system 10 continues to perform the temperature raising operation, it causes the ripple current IR flowing through the capacitor 31 to increase undesirably with a rise in battery temperature TB, which may result in the overvoltage state of the capacitor 31. The time period threshold *LSth* is, therefore, selected to be shorter than a period of time until the temperature raising operation continues to be performed, so that the capacitor 31 will be in the overvoltage state. The use of the time period threshold *LSth* thus determined enables a determination of whether the capacitor 31 now has a risk of being subjected to overvoltage before the capacitor 31 actually becomes overvoltage. The operation in step S31 servers as a setting unit.

In step S13, it is determined whether the capacitor 31 is in the overvoltage state. In this embodiment, the overvoltage conditions also include a fourth condition where the temperature raising time period LS for the assembled battery 20 is longer than the time period threshold *LSth* in addition to the first to third overvoltage conditions used in the first embodiment. Therefore, when the temperature raising time period LS for the assembled battery 20 has not become longer than the time period threshold *LSth,* the capacitor 31 is determined not to be in the overvoltage state. The routine then proceeds to step S14.

In step S31, the time period threshold *LSth* is determined as a function of the battery temperature TB at start of the temperature-raising control task, for example, when the vehicle starts to be activated. Fig. 8 demonstrates a correlation between the battery temperature TB and the time period threshold *LSth* at the start of the temperature-raising control task. In this embodiment, the time period threshold *LSth* is determined to be smaller or shorter with a decrease in battery temperature TB measured at the start of the temperature-raising control task. The temperature raising time period LS for the assembled battery 20 becomes long with a decrease in battery temperature TB at the start of the temperature-raising control task, which will result in a higher risk that the capacitor 31 may be subjected to overvoltage. The risk of overvoltage of the capacitor 31 is minimized by selecting the time period threshold *LSth* to be small with a decrease in battery temperature TB at the start of the temperature-raising control task.

The embodiment described above in detail offers the following beneficial advantages.

The use of the temperature raising time period LS for the assembled battery 20 enables a determination of whether the capacitor 31 has a risk of being subjected to overvoltage, thereby preventing the capacitor 31 from being actually subjected to overvoltage.

The determination of whether the capacitor 31 has a risk of being subjected to overvoltage is achieved by determining whether the temperature raising time period LS for the assembled battery 20 has become longer than the time period threshold *LSth.* The time period threshold *LSth* is, as described above, determined to be decreased with a decrease in battery temperature TB of the assembled battery 20 at the start of the temperature-raising control task. This minimizes a risk that the capacitor 31 may be in the overvoltage state at low temperatures at which the temperature raising time period LS for the assembled battery 20 is required to be increased.

### OTHER EMBODIMENTS

Each of the above embodiments may be modified in the following ways.

The upper arm switches QUH, QVH, and QWH and the lower arm switches QUL, QVL, and QWL may be designed not to have the diodes DUH, DVH, DWH, DUL, DVL, and DWL. In a case where the lower arm switches QUL, QVL, and QWL have the diodes DUL, DVL, and DWL, the circulation of electrical current between the lower arm switches QUL, QVL, and QWL and the rotating electrical machine 40 is achieved by closing at least one of the lower arm switches QUL, QVL, and QWL. In the absence of the diodes DUL, DVL, and DWL in the lower arm switches QUL, QVL, and QWL, the circulation of electrical current between the lower arm switches QUL, QVL, and QWL and the rotating electrical machine 40 requires closing at least two of the lower arm switches QUL, QVL, and QWL.

The second main relay MR2 needs not necessarily be provided. Additionally, the first and second embodiments and the modifications other than the third modification of the first embodiment may alternatively be configured not to have the pre-charge relay PR.

The rotating electrical machine 40 or the inverter 30 may alternatively be designed for multiple phases, such as five or seven phases.

The phase windings 41U, 41V, and 41W of the rotating electrical machine 40 may alternatively be connected in delta not star.

Each switch of the inverter 30 may be implemented by a N-channel MOSFET not an IGBT.

The structure or operation of the temperature raising control device referred to in this disclosure may be realized by a special purpose computer which is equipped with a processor and a memory and programmed to execute one or a plurality of tasks created by computer-executed programs or alternatively established by a special purpose computer equipped with a processor made of one or a plurality of hardware logical circuits. The structure or operation of the temperature raising control device referred to in this disclosure may alternatively be realized by a combination of an assembly of a processor with a memory which is programmed to perform one or a plurality of tasks and a processor made of one or a plurality of hardware logical circuits. Computer-executed programs may be stored as computer executed instructions in a non-transitory computer readable medium. The means for performing the functions of parts of the temperature raising control device needs not necessarily include software, but may be realized by one or a plurality of hardware devices.

The above embodiments realize the following unique structures.

### FIRST STRUCTURE

A temperature raising controller (70) is provided which is used with an electrical power system (10) which comprises: (a) an electrical storage device (20); (b) a rotating electrical machine (40) which includes multi-phase windings (41U, 41V, 41W); (c) an inverter (30) which includes upper arm switches (QUH, QVH, QWH) and lower arm switches (QUL, QVL, QWL), each of the upper arm switches and a respective one of the lower arm switches being connected in series with each other for a respective one of multiple phases, each of joints of the upper arm switches to the lower arm switches being connected to a first end of a corresponding one of the multi-phase windings; (d) a positive electrical path (Lp) which connects high potential terminals of the upper arm switches to a positive terminal of the electrical storage device; (e) a negative electrical path (Ln) which connects low potential terminals of the lower arm switches to a negative terminal of the electrical storage device; (f) a capacitor (31) which is disposed between the positive electrical path and the negative electrical path in electrical connection therewith; and (g) a power supply switch (MR1, MR2, PR, Re) which is disposed between the electrical storage device and the capacitor in at least one of the positive electrical path and the negative electrical path. The temperature raising controller works to control a switching operation of the inverter to create a flow of ripple current in a form of a *d-*axis current between the electrical storage device and the capacitor with the power supply switch closed, thereby increasing temperature of the electrical storage device. The temperature raising controller comprises: (a) a determiner which determines whether an overvoltage condition which results in the capacitor being in an overvoltage state is met during execution of a temperature-raising control task for electrical storage device; and (b) a controller which works to open a first switch combination that is one of a first combination of the upper arm switches and a second combination of the lower arm switches and also close at least one of the upper arm switches or the lower arm switches in a second switch combination that is other of the first and second combinations with the power supply switch closed, and also works to perform a condition control mode to circulate electrical current between the inverter and the rotating electrical machine when the determiner determines that the overvoltage condition is met.

### SECOND STRUCURE

The temperature raising controller, as set forth in *"FIRST STRUCTURE",* wherein diodes (DUH, DVH, DWH, DUL, DVL, DWL) are connected in reverse-parallel to the upper arm switches and the lower arm switches, respectively, and wherein in the condition control mode, the controller works to open all the upper arm switches or the lower arm switches in the first switch combination, close one or more of the upper arm switches or the lower arm switches in the second switch combination, and open a remaining one(s) of the upper arm switches or the lower arm switches in the second switch combination.

### THIRD STRUCTURE

The temperature raising controller, as set forth in *"FIRST STRUCTURE"* or *"SECOND STRUCTURE",* wherein the condition control mode includes a first mode and a second mode which are switched alternately, wherein in the first mode, the controller works to close at least one of the upper arm switches to circulate the electrical current between the inverter and the rotating electrical machine and open all the lower arm switches, and wherein in the second mode, the controller works to open all the upper arm switches and close at least one of the lower arm switches to circulate the electrical current between the inverter and the rotating electrical machine.

### FOURTH STRUCTURE

The temperature raising controller, as set forth in any one of *"FIRST STRUCTURE", "SECOND STRUCTURE,* and *"THIRD STRUCTURE",* wherein when the determiner determines that the overvoltage condition is met, the controller works to alternately switch between a first time period and a second time period. The first time period is a period of time in which a temperature-raising control mode is performed to execute the temperature-raising control task with the condition control mode at rest. The second time period is a period of time in which only the condition control mode is performed.

### FIFTH STRUCTURE

The temperature raising controller, as set forth in any one of *"FIRST STRUCTURE"* to *""FOURTH STRUCTURE",* wherein the power supply switch includes a main switch (MR1) and a series-connected assembly including a sub-switch (PR) and a resistor (Re) which are connected in series with each other and also connected in parallel to the main switch, and wherein in the condition control mode, the controller works to close the sub-switch and open the main switch.

### SIXTH STRUCTURE

The temperature raising controller, as set forth in any one of "FIRST STRUCTURE" to "FIFTH STRUCTURE", wherein the overvoltage condition includes a first condition where a voltage appearing at the capacitor is higher than a first predetermined value, a second condition where an electrical current flowing through the rotating electrical machine is higher than a second predetermined value, and a third condition where an electrical current flowing through the electrical storage device is higher than a third predetermined value, and wherein when at least one of the first condition, the second condition, and the third condition is met, the determiner determines that the overvoltage condition is satisfied.

### SEVENTH STRUCTURE

The temperature raising controller, as set forth in any one of *""FIRST STRUCTURE"* to *"SIXTH STRUCTURE",* wherein when a temperature raising time period for the electrical storage device is longer than a predetermined time period threshold, the determiner determines that the overvoltage condition is satisfied.

### EIGHTH STRUCTURE

The temperature raising controller, as set forth in *"SEVENTH STRUCTURE",* further comprises a setting unit which sets the predetermined time period threshold as a function of a temperature of the electrical storage device at start of the temperature-raising control task, and wherein
the setting unit determines the time period threshold to be short with a decrease in the temperature of the electrical storage device.

### NINTH STRUCTURE

The temperature raising controller, as set forth in any one of *"FIRST STRUCTURE"* to *"EIGHTH STRUCTURE",* wherein when at least one of a first condition and a second condition is satisfied after the overvoltage condition is determined to be met, the controller terminates the condition control mode. The first condition is a condition where a voltage developed at the capacitor converges in a predetermined voltage range, and an electrical current flowing through the rotating electrical machine converges in a predetermined current range. The second condition is a condition where a period of time in which the condition control mode continues to be executed becomes longer than a predetermined period of time.

The present disclosure has been described above on the basis of embodiments and modifications, but the embodiments of the invention described above are for facilitating the understanding of the present disclosure and do not limit the present disclosure. The present disclosure can be modified and improved without departing from the concept and the scope of the claims, and the present disclosure includes equivalents thereof.

## Claims

1. A temperature raising controller (70) for use with an electrical power system (10), the electrical power system comprising:
an electrical storage device (20);
a rotating electrical machine (40) which includes multi-phase windings (41U, 41V, 41W);
an inverter (30) which includes upper arm switches (QUH, QVH, QWH) and lower arm switches (QUL, QVL, QWL), each of the upper arm switches and a respective one of the lower arm switches being connected in series with each other for a respective one of multiple phases, each of joints of the upper arm switches to the lower arm switches being connected to a first end of a corresponding one of the multi-phase windings;
a positive electrical path (Lp) which connects high potential terminals of the upper arm switches to a positive terminal of the electrical storage device;
a negative electrical path (Ln) which connects low potential terminals of the lower arm switches to a negative terminal of the electrical storage device;
a capacitor (31) which is disposed between the positive electrical path and the negative electrical path in electrical connection therewith; and
a power supply switch (MR1, MR2, PR, Re) which is disposed between the electrical storage device and the capacitor in at least one of the positive electrical path and the negative electrical path,
the temperature raising controller works to control a switching operation of the inverter to create a flow of ripple current in a form of a d-axis current between the electrical storage device and the capacitor with the power supply switch closed, thereby raising temperature of the electrical storage device, the temperature raising controller comprising:
a determiner which determines whether an overvoltage condition which results in the capacitor being in an overvoltage state is met during execution of a temperature-raising control task for electrical storage device; and
a controller which, when the determiner determines that the overvoltage condition is met, works to perform a condition control mode which opens a first switch combination that is one of a first combination of the upper arm switches and a second combination of the lower arm switches and also closes at least one of the upper arm switches or the lower arm switches in a second switch combination that is other of the first and second combinations with the power supply switch closed to circulate electrical current between the inverter and the rotating electrical machine.

2. The temperature raising controller as set forth in claim 1, wherein diodes (DUH, DVH, DWH, DUL, DVL, DWL) are connected in reverse-parallel to the upper arm switches and the lower arm switches, respectively,
in the condition control mode, the controller works to open all the upper arm switches or the lower arm switches in the first switch combination, close one or more of the upper arm switches or the lower arm switches in the second switch combination, and open a remaining one(s) of the upper arm switches or the lower arm switches in the second switch combination.

3. The temperature raising controller as set forth in claim 1 or 2, wherein the condition control mode includes a first mode and a second mode which are switched alternately,
in the first mode, the controller works to close at least one of the upper arm switches to circulate the electrical current between the inverter and the rotating electrical machine and open all the lower arm switches,
in the second mode, the controller works to open all the upper arm switches and close at least one of the lower arm switches to circulate the electrical current between the inverter and the rotating electrical machine.

4. The temperature raising controller as set forth in claim 1 or 2, wherein when the determiner determines that the overvoltage condition is met, the controller works to alternately switch between a first time period and a second time period, the first time period being a period of time in which a temperature-raising control mode is performed to execute the temperature-raising control task with the condition control mode at rest, the second time period being a period of time in which only the condition control mode is performed.

5. The temperature raising controller as set forth in claim 1 or 2, wherein the power supply switch includes a main switch (MR1) and a series-connected assembly including a sub-switch (PR) and a resistor (Re) which are connected in series with each other and also connected in parallel to the main switch, and
in the condition control mode, the controller works to close the sub-switch and open the main switch.

6. The temperature raising controller as set forth in claim 1 or 2, wherein the overvoltage condition includes a first condition where a voltage appearing at the capacitor is higher than a first predetermined value, a second condition where an electrical current flowing through the rotating electrical machine is higher than a second predetermined value, and a third condition where an electrical current flowing through the electrical storage device is higher than a third predetermined value,
when at least one of the first condition, the second condition, and the third condition is met, the determiner determines that the overvoltage condition is satisfied.

7. The temperature raising controller as set forth in claim 1 or 2, wherein when a temperature raising time period for the electrical storage device is longer than a predetermined time period threshold, the determiner determines that the overvoltage condition is satisfied.

8. The temperature raising controller as set forth in claim 7, further comprising a setting unit which sets the predetermined time period threshold as a function of a temperature of the electrical storage device at start of the temperature-raising control task, and wherein
the setting unit determines the time period threshold to be short with a decrease in the temperature of the electrical storage device.

9. The temperature raising controller as set forth in claim 1 or 2, wherein when at least one of a first condition and a second condition is satisfied after the overvoltage condition is determined to be met, the controller terminates the condition control mode, the first condition being a condition where a voltage developed at the capacitor converges in a predetermined voltage range, and an electrical current flowing through the rotating electrical machine converges in a predetermined current range, the second condition being a condition where a period of time in which the condition control mode continues to be executed becomes longer than a predetermined period of time.
